# EUROPEAN PATENT APPLICATION

(11) **EP 1 564 264 A1**
(43) Date of publication of application: **17.08.2005**
(21) Application number: 04003050.4
(22) Date of filing: 11.02.2004
(51) Int. Cl.: C09D 5/44, C09D 163/00, C08G 18/54, C08G 18/80, C08G 59/40

(54) **Process for the production of a paint binder and its use as a selfcrosslinking paint binder in an electrodeposition bath**

(71) Applicant: Research Institute of Petroleum Industry of NIOC, Teheran 18799 (IR)
(72) Inventor: Taleban, Hossein, Tehran 18799 (IR); Vakili, Ali, Tehran 18799 (IR); Zarkesh, Jamshid, Tehran 18799 (IR)
(74) Representative: Wallon, Alexander

(57) **Abstract**

The invention relates to a process for the production of a binder, comprising the steps
A) providing a aminoalkylation product, obtainable by reacting
   i) a phenolic compound with
   ii) formaldehyde and
   iii) an amine composition comprising a first compound having a primary amine group (iii-p) and a second compound having a secondary amine group (iii-s),
B) reacting the aminoalkylation product with a semiblocked diisocyanate, subsequently
C) reacting the reaction product of step B) with formaldehyde and subsequently
D) reacting the reaction product of step C) with an epoxy compound.

Furthermore, the invention relates to a paint binder, obtainable by such a process and the use of the inventive paint binder as a selfcrosslinking paint in a cathodic electrodeposition bath.

## Description

The present invention relates to a process for the preparation of a paint binder, which can be dispersed in water after protonation. The invention also relates to the paint binders obtained from this process and the use of these binders as a selfcrosslinking paint in a cathodic electrodeposition bath.

Particularly, the invention relates to a process for the production of a paint binder, preferably a self-crosslinking cationic paint binder which is water-dilutable upon protonation, comprising the steps
A) providing a aminoalkylation product, obtainable by reacting
   i) a phenolic compound with
   ii) formaldehyde and
   iii) an amine composition comprising a first compound having a primary amine group (iii-p) and a second compound having a secondary amine group (iii-s),
B) reacting the aminoalkylation product with a semiblocked diisocyanate, subsequently
C) reacting the reaction product of step B) with formaldehyde and subsequently
D) reaction the reaction product of step C) with an epoxy compound.

Electrodeposition paints are aqueous dispersions of charged organic polymer particles which are used to apply organic coatings to electrically conducting substrates by passage of direct current. When direct current flows between two electrodes the charged particles of the polymer dispersion are deposited on one of the electrodes in a diffusion-controlled boundary layer. Coagulation and deposition of the charged particles occurs as result of the change in pH-value caused by the electrolysis of water. If the charge of the dispersion particles is positive, coagulation and deposition occurs at the cathode, because OH⁻ is formed at the cathode which neutralizes the positive charge. Therefore, these electrodeposition paints are also referred as cathodic electrodeposition paint.

The deposited polymer particles consolidate due to electro-osmosis and rapidly produce a high electrical resistant coating that slows down further deposition. This behaviour results in a uniform coating on the electrode even on parts with complicated shapes such as automobile bodies, the films of which, after stoving, have excellent corrosion-protection properties such as are required.

The polymers used as binders in cathodic electrodeposition paints usually contain reactive groups which are capable of a cross-linking reaction with functional groups of complimentary reactivity. Thereby, the coating we obtained from the new formulation predominant any other formulation has been made. The deposited film is adherent and it deposit a high resistance coat on the phosphated iron plate (cathode). The paint will be then cured to achieve a hard coating of high corrosion resistance and also excellent mechanical properties an impact test in accordance with ASTM-D-2794. The functional groups of complimentary reactivity might be provided either by deposition of polymers containing both reactive groups and functional groups of complimentary reactivity and/or by co-deposition of a cross-linker.

US 4,086,292 discloses a process for preparing a thermo-curable resin which is useful as a binder in a cathodic electrodeposition paint. This process comprises a reaction of a Mannich base which is obtained from condensed phenols, secondary amines containing at least one hydroxyl group and formaldehyde, with an epoxy resin which carries blocked isocyanate groups. However, epoxy resins carrying blocked isocyanate groups must be obtained in a separate reaction. This makes the production of the resin complicated und thus increases the production costs.

EP-B1-0209857 discloses a process for preparing a thermo-curable resin which is useful as a binder in a cathodic electrodeposition paint. This process comprises:
a) reacting a Mannich base of a phenolic compound having secondary amino groups with a semi-block diisocyanate, and
b) subsequently reacting the remaining phenolic hydroxyl groups of the product of step a) with a polyepoxid compound.

US 4,711,937 describes self-crosslinking paint binders, particularly for the formulation of water dilutable, cathodically depositable paints. The binders are obtained by reaction of formaldehyde with the reaction product of an aminoalkylation product and a semiblocked diisocyanate followed by subsequent reaction with an epoxy compound.

The products described in prior art can be used to formulate paints, which after stoving have good corrosion-protection properties, for example required by automobile industry. However, because of the reaction procedure, the process does not allow the use of blocking agents for isocyanate groups which can be split-off at a temperature of below 140 degree Celsius. The temperatures of at least 95 degree Celsius required in the aforesaid process for the reaction of the epoxy compounds with the phenolic hydroxyl groups leads to uncontrollable reactions, which may cause gelling of the reaction charge, when such blocking agents are used. Thus, paints based on the binders according to the above mentioned prior art require stoving temperatures of 150 degree Celsius or higher. However, high curing temperatures are uneconomical and might lead to defects in the coatings.

In view of prior art it was a object of the present invention to provide a paint binder, which can be advantageously used as a self-crosslinking paint binder in a electrodeposition bath for electrocoating a metallic substrate. The paint binder should be curable under smooth curing (stoving) conditions, i.e. at temperatures below 150 °C, preferably below 145 °C. The thermo-curable resin obtained from this process should provide coatings having good coating properties such as mechanical strength, flexibility and corrosion resistance. Furthermore, it is desirable that electrodeposition paints containing these resins are stable against coagulation of the resin particles. Furthermore, the electrodeposition paints should have a high throwing power and allow a good controlling of film thickness.

The object of the present invention could be solved by employing a specific aminoalkylation product in the production of the paint binder according to the present invention.

Therefore, subject matter of the present invention is a process for the production of a binder, comprising the steps
A) providing an aminoalkylation product, obtainable by reacting
   i) a phenolic compound with
   ii) formaldehyde and
   iii) an amine composition comprising a first compound having a primary amine group (iii-p) and a second compound having a secondary amine group (iii-p),
B) reacting the aminoalkylation product with a semiblocked diisocyanate, subsequently
C) reacting the reaction product of step B) with formaldehyde and subsequently
D) reacting the reaction product of step C) with an epoxy compound.

The paint binder obtained by the inventive process provides good coating properties when employed in cathodic electrodeposition paints. Therefore, further subjects of the present invention are a paint binder, obtainable by the process according to the present invention and use of the inventive paint binders in cathodic electrodeposition paints.

In general, the aminoalkylation products (A) of the present invention are prepared according to known methods, see for example, Houben-Weyl, "Methoden der organischen Chemie", Vol. XI/1, page 731 ff. (1957), US 3,346,373, US 2,771,454, US 4,086,292 and US 4,134,932.

In the first reaction step (A) an aminoalkylation product (hereinafter also referred to as Mannich base) is obtained by reaction phenolic compounds (Ai) with an amine composition (Aiii) comprising a first compound having a primary amine group (Aiii-p) and a second compound having a secondary amine group (Aiii-s) in the presence of formaldehyde (Aii).

In general, suitable phenolic compounds (Ai) are monohydric or polyhydric phenols or substituted phenols. The phenolic compounds (Ai) employed in the preparation of amino alkylation product (A) comprises preferably from 2 to 4 and especially exactly 2 phenolic hydroxyl groups. Examples of suitable phenolic compounds are phenol, mono-C₁-C₂₀-alkyl or di-C₁-C₂₀-alkyl phenoles containing at least two benzene rings each of which containing at least one, preferably exactly one hydroxyl group. In a preferred embodiment of the present invention a phenolic compounds (Ai) employed having general the formula I 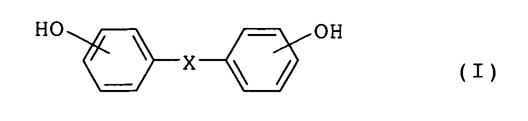 wherein X is selected from C₁-C₁₀ alkylene, S, O, SO, SO₂ or CH₂NRCH₂ with R being C₁-C₆ alkyl. Examples of suitable phenoles of the formula I are bis(4-hydroxyphenyl)methane, 2,2-bis(4-hydroxyphenyl)propane (= bisphenol-A), 1,1-bis(4-hydroxyphenyl)ethane, bis-(4-hydroxyphenyl)sulfone.

In a especially preferred embodiment bisphenol A is used as phenolic compound (Ai).

In general, in the reaction step (A), the amine composition (iii) is used in an amount that from 1 to 3 mols of primary or secondary amino groups, preferably from 1.5 to 2.5, especially preferred about 2 mols, are employed per mole of the phenolic compound (i).

The term "compound having a primary amine group" (Aiii-p) refers to organic molecules, having a primary amino group. Preferably, said term refers to compounds having exactly one primary amino group and, further preferred, no secondary amino group. The "compound having a primary amine group" (Aiii-p) may further comprise functional groups which are inert in a Mannich reaction, e.g. tertiary amino groups, alkoxy groups and hydroxyl groups.

Preferred primary amines (Aiii-p) are selected from the group consisting of monoalkyl amines, hydroxyalkyl amines and dialkyaminoalkyl amines. Each alkyl group in the amines may comprise from 1 to 20, preferably from 2 to 10 and especially preferred from 2 to 4 carbon atoms which may be interrupted by non adjectent oxygen atoms. Examples of suitable primary amines are propyl amine, n-butyl amine, aminoethanol, 2-(C₁-C₄-alkoxy)ethyl amine, such as 2-methoxyethyl amine, 2-ethoxyethyl amine, 2-(hydroxy-C₁-C₄-alkoxy)ethyl amine such as 2-(hydroxyalkoxy)ethyl amine, and 2-(di-C₁-C₄-alkylamino)ethyl amine such as 2-dimethylaminoethyl amine, 2-diethylaminoethyl amine and 3-(di-C₁-C₄-alkylamino)propyl amine such as 3-dimethylaminopropyl amine and 3-diethylaminopropyl amine.

The term "compound having a secondary amine group" (Aiii-s) refers to organic molecules, having a secondary amino group. Preferably, said term secondary amines refers to amino compounds which contain exactly one secondary amino group and, further preferred, no secondary amino group. Optionally further functional groups which are not reactive in a Mannich reaction such as hydroxy, alkoxy or tertiary amino. Examples of suitable secondary amines are di-C₁-C₁₀-alkyl amines such as diethyl amine, di-n-propyl amine, diisopropyl amine, dicyclohexyl amine, cyclic amines such as morpholine and piperidine, di-(hydroxy-C₁-C₄-alkyl) amines such as diethanol amine, etc.

In a preferred embodiment the molar ratio in the amine composition (Aiii) of the first compound having a primary amine group (Aiii-p) to the second compound having a secondary amine group (Aiii-s) is from 0.5 to 1 to 1.5 to 1, preferably 0.6 to 1.4, more preferably about 1 to 1.

In a further preferred embodiment the amine composition (Aiii) comprises diethylamine as the second compound having a secondary amine group. Furthermore, the amine composition (Aiii) comprises diethylaminopropylamine as the first compound having a primary amine group.

The formaldehyde or formaldehyde source used is preferably a solution of formaldehyde in alcohol, aqueous formaldehyde or para formaldehyde or mixture of these. In general, formaldehyde (Aii) is used in an amount from 0.1 to 5 molar parts, preferably from 0.8 to 1.5 molar parts, particularly about 1 molar parts per molar part of the provided phenolic compounds (Ai).

The Mannich reaction to obtain the aminoalkylation product (A) is preferably carried out by heating a batch containing the components in the presence of a solvent which forms an azeotrope with water such as toluene, and removing the water formed during the reaction by azeotropic destillation. After the calculated amount of water has been removed, the reaction product contains an average amount of secondary and optionally tertiary amino groups corresponding to the amount of compounds having primary and secondary amino groups employed in the reaction.
The aminoalkylation product (A) might be isolated or might be employed without isolation as a starting material in step ii. of the process according to the present invention.

The reaction product obtained in step A (aminoalkylation product), preferably having an average of at least one or more secondary amino groups in the molecule, is reacted in a second reaction step B, preferably at 40 to 80 degree C, with a semi-blocked diisocyanate.

The amount of semi-blocked polyisocyanate is generally chosen that at least 50% of the hydroxyl-groups, especially at least 70% of the hydroxyl groups of the product of step A are reacted with the free isocyanate groups of the semi-blocked polyisocyanate. Preferably, the semi-blocked diisocyanate is used in a quantity corresponding to one mole diisocyanate per NH-group of the aminoalkylation product.

The preferred diisocyanates are those wherein the NCO-groups have different reactivity, such as toluenediisocyanate or isophoronediisocyanate. The preferred blocking agents are aliphatic monoalcohols which are split off under stoving conditions below 140 °C, optionally in the presence of common catalysts. Furthermore, other usual blocking agents are phenols, benzylalcohol, oximes, amines, unsaturated alcohols or Diethylen glycol monobutyl ether. Through the reaction of the NH-groups with the semiblocked diisocyanates, urea groups are formed. Because of the preferential reaction between the NH-or-N-and NCO-groups, the hydroxy groups which are formed remain substantially unreacted.

The semi-blocked polyisocyanates can be easily prepared in a known manner by reacting unblocked polyisocyantes with an amount of blocking agent sufficient for blocking a part but not all of the isocyanate groups of the polyisocyanate. In case of diisocyanates usually equimolar amounts of diisocyanate and blocking agent are used. In order to achieve a selective blocking of only one isocyanate group those diisocyanates are preferred wherein the first isocyanate group is attacked more rapidly than the second isocyanate group.

The reaction of the semi-blocked polyisocyanate is usually carried out at temperatures which do not exceed 120°C, preferably 100°C and especially preferred at from 60 to 90°C. The reaction is usually continued until virtually no further free isocyanate groups remain. The reaction is usually carried out by addition of the semi-block polyisocyanate to the reaction mixture of step A. However, the reaction product of step A might be diluted before the addition of the semi-block diisocyanate with an inert solvent. Suitable inert solvents are e.g. the above mentioned hydrocarbon solvents such as xylene, toluene, aliphatic and cycloaliphatic hydrocarbons and ethers, ketones and ether-esters such as butylcellosolve.

The products obtained from the above reaction step B have active hydrogen atoms at the phenolic structures as well as at the urea groups, which will react with formaldehyde in reaction step C under formation of methylol groups.

In a preferred embodiment 50 to 80 % of these hydrogen atoms are reacted in step C with formaldehyde. The intermediate products are usually reacted between 70 and 120 °C, preferably at 90°C. In reaction step C the employed formaldehyde is preferably being used as paraformaldehyde. The reaction preferably is continued to a point until the content of free formaldehyde has reached a constant value.

The product of reaction step C is subsequently reacted with an epoxy compound in reaction step D. In reaction step D phenolethers are formed.

Preferred epoxy compounds are based on polyhydric phenolic compounds. Such compounds are obtained by reacting a phenolic compound with epichlorohydrin. These compounds are also referred to as glycidyl-ether of phenolic compounds or glycidyl-ether-based epoxy resins. They are well-known in the art (cf. J. Muskopf et al. in Epoxy Resins, Ullmann's encyclopedia of Industrial Chemistry, 5^{th} edition on CD-ROM, Chapter 2) and are commercially available unter the trademarks Epon, Epikote, Eponol, Eponex (Shell), Araldite, Aracast (Ciba-Geigy), Unox (Union Carbide), Sumi-epoxy (Sumitomo Chemical), Epomic (Mitsui Petrochemical Epoxy) etc. Examples of suitable glycidyl-ethers based on phenolic compounds are phenol- and cresol-based epoxy novolacs, glycidyl-ethers of phenol aldehyde-adducts, glycidyl-ethers of phenol-hydrocarbon novolacs, furthermore aromatic glycidyl amines such as reaction product of p-aminophenol with 3 moles of epichlorhydrine and the reaction product of bis(4-aminophenyl)methane with 4 moles of epichlorhydrine. In a preferred embodiment of the present invention an epoxide compound BE is used in step ii. which is a glycidyl-ether based on a dihydric phenolic compound of the formula I as defined above, especially a glycidyl-ether based on Bisphenol A.

In general, epoxy compound used in step D of the present invention have an epoxide equivalent weight of 180 to 1500, preferably of from 250 to 700, more preferably of 450 to 550, wherein the epoxide equivalent of a resin is understood as the amount of resin in g per mole of epoxy groups in the resin.

The amount of epoxide compound is preferably from 0.5 to 3, preferably from 1.5 to 1.5 moles, more preferably about 2 moles, per mole of the phenolic compound.

In general, the reaction of step D is carried out at temperatures from 80 to 130 °C, preferably from 100 to 110 °C. The reaction of step D is usually performed until most of the epoxy groups, preferably at least 95% of the epoxy groups have been reacted. Especially the reaction is performed to an epoxide value of practically zero.
Usually step D is performed in an inert solvent, i. e. in the solvent employed for preparing the aminoalkylation product, which is usually a hydrocarbon solvent such as toluene or an aliphatic or cycloaliphatic solvent such as hexanes, cyclohexane benzene, Ethers, Esters and Ether-esters such as butyl cellosolve etc. In a preferred embodiment cellosolve (ethylenglykolmonobutylether) is used as solvent.

In a preferred embodiment monoepoxy compounds can be additionally employed to the above mentioned diepoxy resins. Examples of suitable mono epoxide compounds are glycidyl-ethers of aliphatic alcohols having at least 4 carbon atoms, especially from 4 to 20 carbon atoms, and glycidyl esters of aliphatic monocarboxylic acids having at least 5 carbon atoms, especially from 6 to 20 carbon atoms such as epoxyd esters of Koch acids, i.e. branched and preferably tertiary aliphatic acids. The latter are especially preferred.

In a further embodiment, optionally, di-or polyepoxy resins can either be partially defunctionalized or sometimes lengthened through reaction with mono-or polycarboxylic compounds. Suitable monocarboxylic compounds for the reaction are the natural and synthetic fatty acids or semi-esters of dicarboxylic acids with aliphatic monoalcohols or hydroxyalkyl oxazolidines.

The preferred polycarboxy compounds for the reaction are long-chain dicarboxylic acids
such as dimeric fatty acids or polycarboxy compounds which can be used are the adducts of maleic anhydride with long-chain polyene compounds. The reaction of the carboxy compound with the diepoxy resin can be carried out prior to the reaction with the intermediate product obtained in the step C, particularly at temperature of 125 °C.

The reaction of the epoxy compound with the carboxy compound also can be carried out simultaneously with process step D. In this case, the intermediate product of step C, the carboxy compound, and the diepoxy resin are reacted at about 125 °C. to an epoxy compound having an epoxy value of practically zero.

In a preferred embodiment the reaction product of step D have the necessary basicity to ensure an advantageous stability of an aqueous solution of the binder. Particularly, the reaction product shows an amino value of 20 to 30mg KOH/g, which preferably can be effected through the use of the secondary amines (the second compound of the amine composition Aiii) in the aminoalkylation reaction.

From the in Step D obtained reaction mixture the paint binder can be isolated by evaporating the volatile components such as solvent. However, isolation of the binder is usually not necessary since the thus obtained reaction mixture can be directly diluted with water after addition of an amount of acid sufficient to protonate at least a part of the amino groups in the thus obtained resin. Suitable acids are e. g. phosphoric acid and its derivatives, sulfuric acid and preferably water soluble carboxylic acids, especially formic acid, acetic acid or lactic acid. In general, it is sufficient to neutralize 25-40% of the basic groups (pH=6).

In order to provide a suitable stability of the resin particles up on dilution with water it has been proven advantageous that the amine number of the resin is at least 30 mg KOH/g . Thus it is preferred to add at least 20 to 60 mmol of acid per 100 g of solid resin. The thus obtained protonated resin can be diluted with water to the desired concentration which may preferably range from 20 to 50% by weight of solid resin based on the total amount of the aqueous dispersion. The thus obtained aqueous dispersion of the resin can be used as a binder in an electrodeposition process. The aqueous dispersion can be formulated as an electrodeposition paint by adding conventional additives, optionally pigments, extenders, cross-linkers and cross-linking catalysts if desired. Suitable additives are defoamers, preservatives, film forming aids, etc. A skilled person in the art of electrodepostion paints is familiar therewith.

In a preferred embodiment the thermo-curable, water dispersible resin of the present invention is formulated with a resinous cross-linker, which also can be dispersed and/or dissolved in water upon protonation and which contains at least two functional groups per molecule, which are reactive toward the isocyanate groups of the thermo-curable resin of the invention. Suitable functional groups are primary and secondary amino groups and hydroxyl groups. The latter are preferred.
It is also preferred that the crosslinker contains protonated amino groups, preferably in amounts of from 0.2 to 1 moles per kg of crosslinker, which allow to disperse and/or dissolve the resinous cross-linker in water after protonation of the amino groups. Preferred crosslinkers comprise besides the reactive groups tertiary amino groups.
In an electrocoating process this resinous cross-linker is deposited together with the thermo-curable resin of the present invention on the cathode, thus being a part of the polymeric coating. Under stoving conditions the reactive groups of the cross-linker react with the isocyanate groups, thereby forming a polymeric coating of extraordinary mechanical stability and flexibility.

Suitable cross-linkers are known from the art, for example see US-A-5401782. In the event the binders do not have self-crosslinking structures to a sufficient extent, additional crosslinking components,such as blocked isocyanates,amino resins or phenolic resins,or additional components which carry hydroxyl groups,such as epoxy resin-amine adducts,can also be used.

In a preferred embodiment of the present invention the cross-linker is the reaction product of a polyepoxide compound, preferably a polyepoxide compound having an epoxide equivalent of from 180 to 1000, preferably of from 250 to 700, and a dialkanolamine such as diethanol amine. The amount of dialkanolamine is preferably chosen to provide equimolar amounts of amino groups and epoxy groups in the polyepoxide compound. Preferably the polyepoxide compound is chosen from glycidyl-ethers based on polyhydric phenoles, especially based on dihydric phenoles of the formula I as mentioned above.

Therefore, another subject of the invention is a thermo-curable composition, comprising
α) the inventive paint binder and
β) the above described crosslinker.

The relative amount in said composition of paint binder according to the present invention and cross-linker is usually of from 10:1 to 1:2 preferably of from 6:1 to 1:1 and especially of from 5:1 to 3:1 (weight ratio).

The paint binder of the present invention is preferably used in an electrodeposition process in the form of an aqueous dispersion. By "dispersion" is meant a two-phase transparent, translucent, or opaque aqueous resinous system in which the resin, curing agent, pigment, and water insoluble materials are the dispersed phase and water and water soluble materials comprise the continuous phase. The dispersed phase has an average particle size less than about 10 microns, preferably less than 5 microns.

Therefore, it is a further subject of the invention to use the paint binder of the present invention (that means the reaction product of process step D) as a selfcrosslinking paint binder in a cathodic electrodeposition bath.

To improve the stability of the electrodeposition bath the binders of the present invention can be combined with a resin having quaternary ammonium hydroxide groups, which is preferably water-soluble after protonation.

Therefore, a further subject of the invention is an electrodeposition bath, consisting of an aqueous dispersion comprising
a) a paint binder according to the present invention, that means obtainable according to the above reaction steps A to D,
b) a resin having quaternary ammonium hydroxide groups,
c) optionally pigments and extenders and
d) optionally a coalescing solvent.

In general, the proportion of component (b) (hereinafter also called resin b) in the electrodeposition bath is between 20 and 80% by weight, based on 100 weight % of component (a).

A further object of the present invention is the use of a water soluble or water-dispersable resin having quaternary ammonium hydroxide groups (b) for controlling the pH of an aqueous electrodeposition bath in a process of the cathodic electrodeposition of the protonated form of a thermo-curable resin having tertiary amino groups, for example the paint binder of the present invention.

As explained above the coagulation and deposition of the positively charged polymeric binder particles on the cathode occurs as result of the change in pH-value caused by hydroxide ions formed at the cathode by electrolysis of water during the electrodeposition process. The OH⁻ deprotonates the thermocurable resin and thus coagulation of the resin particles occur.

At the same time acid is liberated at the anode which builds up in the electrodeposition bath and which may leads to corrosion of the equipment and raises the conductivity of the bath making it more difficult to electrodeposit smooth uniform coatings.

It has now been found that this problem could be overcome by the addition of resin A to the electrodeposition bath during the electrodeposition process, thereby keeping the pH of the electrodeposition bath constant or nearly constant.

This method can be applied to any cathodic electrodeposition paint wherein the binder is the protonated form of resin having tertiary amino groups. In a preferred embodiment of the invention this method is used to control the pH in an electrodeposition process wherein the resin to be deposited comprises a thermo-curable resin as defined above.

The chemical nature of the resin (b) is of minor importance. It is just required that the resin has quaternary hydroxide groups usually in an amount of from 0.2 to 1 mol per kg of resin, preferably from 0.3 to 0.9 moles per kg of resin and especially from 0.25 to 0.6 moles and especially preferred from 0.3 to 0.5 moles per kg of resin.

Resins having quaternary ammonium hydroxide groups can be easily prepared by methods known from the art. It is a preferred embodiment to use a resin which is obtained by reacting an epoxy group containing resin (b1) with a tertiary amine (b2) in the presence of water. This process is well-known in the art, e.g. from US Pat.No.3839252 to Bosso and Wismer discloses quaternary ammonium salt group-containing resins, useful for electrodeposition, which are prepared by reacting organic polyepoxides with amine acid salts in the presence of water.

The resin (b1) which contains at least one epoxy group may be chosen from any epoxy resin and preferably from a glycidyl-ether based on a polyphenol.

In a preferred embodiment resin b1 additionally contains reversibly blocked isocyanate groups (hereinafter called resin b1'). These resins b1' are known from the literature, e.g. from urethanelinkages and they can be easily obtained by reacting an epoxy group containing resin which also contains hydroxyl groups with a semi-blocked polyisocyanate. Examples of suitable resins containing both epoxy groups and hydroxyl groups are the above mentioned glycidylethers of polyhydric phenoles e.g. of dihydric phenoles of the formula I, since these glycidylethers usually contain several secondary OH-groups as a result of the reaction of epoxy groups with phenolic OH during the preparation of the glycidylethers. They are well known in the art and commercially available (see Muskopf et al. Ullmann's Encyclopedia of Industiral Chemistry 5^{th} Edition on CD-ROM, Epoxy Resins Chapter 2. Especially preferred are Glycidylethers based on dihydric phenoles, which have an epoxid equivalent of from 180 to 1000, preferably of from 300 to 800, more preferably of from 180 to 190.

The compound (b2) can be any compound having a tertiary amino group such as trialkylamines, trialkanoleamines etc, wherein each alkyl group may contain from 1 to 20, preferably from 2 to 6 carbon atoms. The compound (b2) may or may not contain further functional groups which are not reactive towards isocyanate groups.

In a preferred embodiment of the present invention the resin b is obtained by reacting the epoxy group containing resin b1 with a quaternizing agent (hereinafter called b2') containing at least one reversibly blocked isocyanate group and at least one tertiary amino group. This quaternizing agent b2' can be easily obtained by reacting a tertiary amine having an additional functional group, which is reactive towards isocyanate groups, with a semi-blocked polyisocyanate, preferably semi-blocked diisocyanate and especially a semi-blocked aromatic diisocyanate as described above. These quaternizing agents b2' are well-known in the art, e. g. from EP-B1-0209857 and US.Pat.No.5401782.

The quaternizing agent b2' is then reacted with the epoxid compound b1. Usually the reaction is carried out in a solvent, preferably in butylcellosolve, optionally in the presence of water, thereby forming a resin having the required amount of quaternary ammonium hydroxid groups (b).

In an especially preferred embodiment of the present invention the resin b is the reaction product of a polyepoxid-compound having already semi-blocked isocyanate groups (resin b1') with a tertiary amine that also contains semi-blocked isocyanate groups (quaternizing agent b2'). By reacting b1' and b2' in the presence of water an ammonium hydroxid-containing resin is obtained which contains both quaternary ammonium hydroxid-groups and semi-blocked isocyanate groups.

Resins b, which are obtained from the reaction of A1' with A2' have been proven advantageous since the resin A is deposited during the electrodeposition process on the cathode, thereby forming a part of the coating.

The resin having quaternary ammonium hydroxide groups (b) is used in the electrodeposition bath for controlling the pH-value. The positively particles on the cathode occurs as result of electrolysis of water during the electrodeposition process and at the same times neutralize the acid liberated on the anode , thereby controlling the pH of the electrodeposition bath. The resin can be fed either in portions or continuously. The acid build up at the anode in the electrodeposition bath may lead to corrosion of the equipment, also raises the conductivity of the bath and makes it more difficult to electrodeposit smooth uniform coatings.

According to the invention the paint binder optionally in combination with the cross-linker is used in the form of an aqueous dispersion during the electrodeposition process. As the term dispersion is believed to be a two-phase, transparent, translucent or opaque resinous system in which the resin is the dispersed phase and water is the continuous phase. The dispersed phase as well as the aqueous phase may comprise also solvents which result from the production of the resin.

The average particle diameter of the resinous phase in the electrodeposition bath is generally less than 10 micro meter, preferably less than 7 micro meter, more preferably from 0.1 to 5 micro meter. The concentration of the resinous phase in the electrodeposition bath is usually at least 5 % by weight, preferably from 7 to 25 % by weight, and especially from 8 to 20 % by weight, based on the total weight of the electrodeposition bath.

The electrodeposition bath of the present invention optionally contains as component (c) pigments and/or extenders. Said pigments and extenders are known in the art and usually used in in electrodeposition processes. Examples are lead silicate, carbon black, titanium dioxide, kaolin and/or dibutyltin oxide. In general, the weight-ratio of pigments and extenders to resin (b) is usually from 0.5 to 1.5.

The electrodeposition bath of the present invention optionally contains as component (d) a coalescing solvent, particularly in an amount from 2 to 4 weight-%, referred to 100 weight-% of component (b). The coalescing solvent either results from the production of the resins or may be added as a coalescence. Useful coalescing solvents include hydrocarbons, alcohols, esters, ethers and ketones. Preferred coalescing solvents include alcohols, polyoles and ketones.

Optionally, the electrodeposition bath of the present invention contains further other additives such as catalysts, plasticizers, surfactants, wetting agent, defoamers, and anti-cratering agents.

A further subject of the present invention is a process for electrocoating a metallic substrate, said process comprising the immersion of a substrate to be coated in the electrodeposition bath of the present invention and pass an electric current through the electrodeposition bath, wherein the substrate is arranged as cathode, and subsequently stoving the coated substrate at temperatures below 150 °C.

For electrodeposition of the above mentioned resins the electrodeposition bath is placed in contact with an electrically conducting anode and an electrically conductive cathode with the surface to be coated being the cathode. Following contact with the aqueous dispersion a sufficient voltage is impressed between the electrodes. Thereby the binder components of the aqueous electrodeposition bath are deposited on the cathode thereby forming a coherent film. The applied voltage may be right and can be, for example, as low as 1 volt to as high as several thousands volt, but typically between 50 and 500 volts. The current density is usually between 0.5 ampere and 15 ampere per square foot and tend to decrease during the electrodeposition indicating the formation of an incylating coding on the cathode.

A resin according to the present invention can be applied to a variety of electroconductive substrates especially metals such as steel, aluminium, copper, magnesium and alike, but also including metallized plastic and conductive carbon coated material.

In order to use the deposited films as primers curing (via stoving) is necessary. In general, curing of the deposited films is carried out at temperatures below 150 °C, preferably from 128 °C to less than 150 °C, especially preferred from 130 °C to 145 °C and particularly for a period of 20 to 25 minutes.

The present invention should be illustrated by the following examples.

### Examples:

All quantities in parts or percentages refer to weight units unless stated otherwise . EEW in these examples denotes epoxide equivalent weight.

### Example 1: Preparation of self-crosslinking paint binder

In a suitable reaction vessel, 228 parts bisphenol A (1 mol) are heated with 130 parts of Diethylaminopropylamine (1 mol) and 73.14 parts of diethylamine (1 mol) and 33 parts of paraformaldehyde 91%(1 mol) in the presence of 100 parts of toluol as azeotropic entraining agent at the azeotropic temperature. After removal of reaction water , the mixture is cooled to 40 °C, 608 parts (2.0 moles) of toluenediisocyanate semi-blocked with 2-ethylhexanol are added to the charge within 30 minutes and is heated and stir-stirred at 80 °C for 30 minutes. As soon as an NCO-value of substantially zero is reached, the batch will be diluted with 140 parts diethyleneglycol dimethylether.
The solution obtained is reacted at 80 °C with 49.5 parts paraformaldehyde, 91% (1.5mol) for 2 hours. Then 860 parts of a 75% solution (about 2.0 moles) of an epoxy resin (based on epichlorohydrin and bisphenol A, epoxy equivalent weight of about 480) , 420 parts (1.68 moles) of a glycidyl ester of a C.sub.9-C.sub.11-tertiary monocarboxylic acid and 100 parts (0.17 moles) of a dimeric fatty acid (acid value 186-194mg KOH/g; viscosity 3900mPa.s/25.degree C; dimer content at least should be 75%; trimer content at least 20%) are added, and the reaction mixture is carried on at 105 degree C until all epoxy groups have been consumed.

80 parts, based on 100% solids, of the end product of Example 1 are mixed with 20 parts on a 100% solids bases, of an epoxide-amine adduct as an additional component and the mixture is stirred at 100 °C. for ca. 20 minutes. After neutralization with about 20 millimol of formic acid per 100g of solids resin, the mixture is diluted with deionzed water to solids content of about 25%, while stirring.

### Example 2:Preparation of a cross-linker:

1 mol of a epoxy resin based on bisphenol A and epichlorohydrin (EEW of about 475) is reacted with 2 mol of diethanolamine at a temperature of ca 85 °C. for 30 minutes.

### Example 3:Preparation of toluenediisocyanate semi-blocked with 2-ethylhexanol:

A reaction vessel was charged with 174 parts of toluenediisocyanate and diluted with 33.9 parts of methyl isobutyl ketone and subsequently 0.2 parts of dibutyltin-dilaurate as catalyst. After raising a temperature to 50 °C. 131.5 parts of 2-ethylhexanol was added dropwise under dry nitrogen atmosphere and the mixture was agitated for 2 hours to cause reaction. By appropriate cooling, the reaction temperature was held at 50 °C. As the result, a 2-ethylhexanol-half blocked toluenediisocyanate was obtained (solid content was 95%).

### Example 4: Preparation of the resin having quaternary ammonium hydroxide groups, component (b) of the electrodiposition bath

The reaction vessel was charged with 219 parts of EPON 828 (a epoxy resin having a medium viscosity and a EEM from 186 to 190) and 89 parts of bisphenol A under a nitrogen atmosphere and heated at 185 °C. for about one hour. The reaction mixture was cooled to 120 °C. followed by addition of 150 parts of butylcellosolve and 125 parts of 2-ethylhexanol half -capped toluene diisocyanate. The reaction mixture was held at 120 °C. for 1 hour and cooled to 85 °C. homogenized and charged with 60 parts of water and 158 parts of quaternizing agent (according to example 5). The temperature of the reaction mixture was held at 85 °C. for about 30 min.

### Example 5: Preparation of quaternizing agent:

90 parts of 2-ethylhexanol half-capped toluene diisocyanate was added to 30 parts of dimethylethanolamine at room temperature. The mixture exothermed and was stirred for one hour at about 80 °C. Then 30 parts of lactic acid and 10 parts of butylcellosolve were added. The reaction mixture was stirred for about one hour at 65 °C. to form the quaternizing agent.

### Example 6: Preparation of pigment paste served as pigment vehicle and also as buffer:

50 parts of the resin having quaternary ammonium hydroxide groups (according example 4) was dissolved in 200 parts of water and add 100 parts of titanium dioxide, 24 parts of kaolin, 6 parts of carbon black, 8 parts of lead silicate and 8 parts of dibutylti-noxide. This mixture was grinded to a size of less than 5 microns.

### Example 7: Preparation of electrodeposition bath:

100 parts of pigment paste (according to example 6) were mixed with 200 parts of the paint binderaccording to example 1, 25% solid . The mixture was grinded to a size of less than 5 microns. The pH-value of the electrodeposition bath is at this stage 5.9. Zinc- phosphated steel panels were cathodically electrodeposited with this electrodeposition bath at 200 volts for 2 minutes at a bath temperature of 80 ° F(27 °C). The stoving temperature is chosen according to the blocking agents used for the paint binder and was 149°C.

### Results:

All the coatings show excellent mechanical properties including an impact test in accordance with ASTM-D-2794 of at least 80i.p.;no flaking in the mandrel bending test in accordance with ASTM-D-522-60, and excellent corrosion resistance on zinc phosphated steel panels which has not been pretreated in accordance with the salt spray test in accordance with ASTM-B-117-64 where attack on the cross-cut after a test duration of more than 360 hours is a maximum of 2mm.

### Comparative Example 8:

A paint binder and deposited films were produced according to example 1 of US 4,711,937.

Following differences were observed between binders and deposited films according to the present invention and those according to example 8:
1) The basicity of the paint binder is higher, than the paint binder of comparative example 8.
2) The higher basicity can guarantee stability of the aqueous solution.
3) By simple mixer it is possible to grind the paint binder of the present invention easy to a size of less than 5 microns within short time. The milling takes more time with samples according to comparative example 8.
4) The emulsification of paint binder in water goes very fast compared with the paint binder of example 8, which take 48 hours.
5) The film shows excellent corrosion resistance in saltspray (more than 520 hours), compared with the paint binder from prior art, which showed less than 120 hours..
6) The stoving temperature of the paint binder of the present invention is from 128 to 149 °C, compared with the paint binder of example 1 of, which is stoved at 170 °C.

## Claims

1. Process for the production of a paint binder, comprising the steps
A) providing a aminoalkylation product, obtainable by reacting
i) a phenolic compound with
ii) formaldehyde and
iii) an amine composition comprising a first compound having a primary amine group (iii-p) and a second compound having a secondary amine group (iii-s),
B) reacting the aminoalkylation product with a semiblocked diisocyanate, subsequently
C) reacting the reaction product of step B) with formaldehyde and subsequently
D) reacting the reaction product of step C) with an epoxy compound.

2. Process according to claim 1, **characterised in that** in the amine composition (iii) the molar ration of the first compound having a primary amine group (iii-s) to the second compound having a secondary amine group (iii-p) is from 0.5 to 1 to 1.5 to 1, preferably 1 to 1.

3. Process according to claim 1 or 2, **characterised in that** the amine composition Aiii) comprises diethylamine as the second compound having a secondary amine group.

4. Process according to anyone of claims 1 to 3, **characterised in that** the epoxy compound employed in step D) has an epoxy equivalent weight of 450 to 550.

5. Paint binder, obtainable by a process according to anyone of claims 1 to 4.

6. Paint binder composition, containing
α) a paint binder according to claim 5 and
β) a crosslinker.

7. Use of a paint binder according to claim 4 or of a paint binder composition according to claim 6 as a selfcrosslinking paint in a cathodic electrodeposition bath.

8. Electrodeposition bath, consisting of an aqueous dispersion comprising
a) a paint binder according to claim 5 a paint binder composition according to claim 6 and
b) a resin having quaternary ammonium hydroxide groups, preferably having 0.2 to 0.9 moles of quaternary ammonium hydroxide groups per kg of resin,
c) optionally pigments and/or extenders and
d) optionally a coalescing solvent.

9. Electrodeposition bath according to claim 7 or 8, **characterised in that** the resin having quaternary ammonium hydroxide groups b) is obtainable by reacting a semi-blocked isocyanate groups (resin b1') with a tertiary amine that also contains semi-blocked isocyanate groups (quaternizing agent b2').

10. A process for electrocoating a metallic substrate, said process comprising the immersion of a substrate to be coated in an electrodeposition bath according to anyone of claims 7 to 9 and pass an electric current through the electrodeposition bath, wherein the substrate is arranged as cathode, and subsequently stoving the coated substrate at temperatures below 150 °C.
